# FASCICULE DE BREVET EUROPEEN

(11) **EP 0 374 020 B1**
(45) Date de publication et mention de la délivrance du brevet: **03.03.1993**
(21) Numéro de dépôt: 89403401.6
(22) Date de dépôt: 08.12.1989
(51) Int. Cl.: F02K 9/48, F04D 13/04, F01D 25/00

(54) **Ensemble structural compact d'alimentation d'un moteur-fusée en ergols à haute pression**
Kompakte Hochdruckturbopumpe zur Versorgung eines Raketenmotors mit Treibstoff
High-pressure turbo pump providing a rocket motor with fuel

(30) Priorité: 12.12.1988 FR 8816340
(43) Date de publication de la demande: 20.06.1990
(73) Titulaire: SOCIETE EUROPEENNE DE PROPULSION, 92150 Suresnes (FR)
(72) Inventeur: Méchin, Claude, F-27950 St. Marcel (FR)
(74) Mandataire: Thévenet, Jean-Bruno

(56) Documents cités:
- CH-A- 313 449
- US-A- 2 707 919
- US-A- 3 091 921

## Description

La présente invention a pour objet un ensemble structural compact d'alimentation d'un moteur-fusée en ergols à haute pression, comprenant un générateur de gaz, une première turbopompe composée d'une première turbine et d'une première pompe pour l'alimentation de la chambre de combustion du moteur-fusée en un premier ergol, une deuxième turbopompe composée d'une deuxième turbine et d'une deuxième pompe pour l'alimentation de la chambre de combustion du moteur-fusée en un deuxième ergol, des moyens de distribution des gaz chauds issus du générateur de gaz vers lesdites première et deuxième turbines, et des moyens de collecte et d'évacuation des gaz chauds de sortie desdites turbines.

On connait déjà, par exemple dans le cas du moteur-fusée dénommé VULCAIN, un dispositif d'alimentation de la chambre de combustion d'un moteur-fusée en ergols (hydrogène et oxygène) à haute pression, qui comprend deux turbopompes indépendantes, l'énergie nécessaire au fonctionnement des deux turbines étant fournie par des gaz de combustion créés dans un générateur de gaz unique alimenté en oxygène et en hydrogène par prélèvement en sortie des pompes, selon un cycle à flux dérivé.

Dans la réalisation précitée, les deux turbopompes de mise en pression de l'oxygène et de l'hydrogène liquide sont réalisées à partir de différents alliages ou métaux adaptés aux contraintes thermiques exercées et sont montées séparément sur un bâti selon une architecture classique, des tuyauteries métalliques assurant les liaisons entre le générateur de gaz et les turbines. Une telle architecture conduit à un encombrement important et impose des limites pour les températures de fonctionnement et restreint les possibilités d'amélioration du rendement.

On a par ailleurs déjà proposé d'utiliser des matériaux composites thermostructuraux pour réaliser la chambre d'un générateur de gaz et des tuyauteries de distribution de gaz chauds. Les tuyauteries en matériaux composites thermostructuraux peuvent supporter des températures plus élevées que les tuyauteries métalliques, mais leur utilisation conduit à une très grande complexité de mise en oeuvre. Les tuyauteries composites impliquent en effet l'utilisation de gaines métalliques destinées à la récupération des fuites dues aux porosités, ainsi qu'à la neutralisation de leur important rayonnement thermique.

La présente invention vise à remédier aux inconvénients précités et à permettre une simplification de l'architecture d'un ensemble propulsif qui garantisse un encombrement réduit, une démontabilité aisée, une réduction de masse et autorise en outre une amélioration du rendement, grâce à la possibilité de disposer d'importants gradients de température à l'intérieur de cet ensemble, tout en répondant aux divers impératifs de sécurité.

Ces buts sont atteints grâce à un ensemble structural d'alimentation d'un moteur-fusée en ergols à haute pression du type mentionné en tête de la description,
**caractérisé** en ce qu'il comprend une structure principale essentiellement de révolution autour des axes de rotation des première et deuxième turbopompes, qui est réalisée en matériaux composites thermostructuraux, enveloppe lesdites première et deuxième turbines, et solidarise l'ensemble des corps de pompe des première et deuxième turbopompes et du corps du générateur de gaz; des éléments de cloisonnement interne rapportés sur ladite structure principale, qui sont également réalisés en matériaux composites thermostructuraux et délimitent l'espace interne à ladite structure principale en une pluralité de cavités communicantes assurant la circulation des gaz chauds en provenance du générateur de gaz vers lesdites première et deuxième turbines ainsi que la collecte des gaz de sortie desdites turbines et l'évacuation de ces gaz vers un même conduit d'évacuation, et une enceinte métallique externe étanche qui enveloppe ladite structure principale en constituant un écran contre le rayonnement thermique de ladite structure principale en matériaux composites et en délimitant un espace annulaire qui débouche dans ledit conduit d'évacuation, et sert à la récupération des gaz de sortie des turbines ainsi que des gaz résultant des fuites à travers les parois composites poreuses.

Selon une caractéristique particulière, les liaisons entre les corps de pompe constituant des pièces froides et ladite structure principale constituée de pièces chaudes sont assurées par des axes radiaux qui maintiennent le centrage de ladite structure principale tout en permettant des variations diamétrales relatives importantes de celle-ci par rapport aux corps de pompe.

Selon un premier mode de réalisation, l'invention s'applique à un ensemble structural dans lequel les turbines des première et deuxième turbopompes sont alimentées en parallèle à partir du générateur de gaz,
caractérisé en ce que les éléments de cloisonnement définissent une chambre collectrice principale alimentée par les gaz chauds du générateur de gaz qui débouche directement d'une part par de premiers orifices dans une première chambre annulaire alimentant une couronne d'injecteurs disposée en regard de la première turbine et d'autre part, par un orifice variable muni de moyens d'ajustement de section commandés par un système de régulation, dans une seconde chambre alimentant une couronne d'injecteurs disposée en regard de la deuxième turbine, une première chambre de collecte des gaz de sortie de la première turbine et une deuxième chambre de collecte des gaz de sortie de la deuxième turbine, et en ce que des orifices sont ménagés dans la structure principale pour permettre l'évacuation des gaz contenus dans les première et deuxième chambres de collecte vers ledit espace annulaire de récupération de gaz débouchant dans ledit conduit d'évacuation.

Selon un autre mode de réalisation, l'invention s'applique à un ensemble structural dans lequel les turbines des première et deuxième turbopompes sont alimentées en série à partir du générateur de gaz, caractérisé en ce que le éléments de cloisonnement définissent une chambre collectrice principale alimentée par les gaz chauds du générateur de gaz qui débouche par de premiers orifices dans une première chambre annulaire alimentant une couronne d'injecteurs disposée en regard de la première turbine, une chambre intermédiaire pour collecter les gaz de sortie de la première turbine et alimenter une couronne d'injecteurs disposée en regard de la deuxième turbine, et une chambre de collecte des gaz de sortie de la deuxième turbine, et en ce que des orifices sont ménagés dans la structure principale pour permettre l'évacuation des gaz contenus dans la chambre de collecte des gaz de sortie de la deuxième turbine vers ledit espace annulaire de récupération de gaz débouchant dans ledit conduit d'évacuation.

Avantageusement, la chambre intermédiaire est limitée extérieurement par une cloison mince en matériaux composites percée d'une pluralité de petits trous qui mettent la chambre intermédiaire en communication avec une cavité annulaire limitée extérieurement par la structure principale de révolution, et un système de régulation par by-pass est monté sur ladite structure principale pour faire communiquer sélectivement ladite cavité annulaire avec ledit espace annulaire de récupération de gaz et réduire sélectivement la pression dans ladite chambre intermédiaire.

Selon une autre caractéristique particulière de l'ensemble structural selon l'invention, la structure principale de révolution en matériaux composites reliant les première et deuxième turbopompes comprend un premier tronçon de structure principale relié au corps de pompe de la première turbopompe et essentiellement de révolution autour de l'axe de rotation de ladite première turbopompe et un second tronçon de structure principale relié au corps de pompe de la deuxième turbopompe et essentiellement de révolution autour de l'axe de rotation de ladite deuxième turbopompe, les premier et second tronçons de structure principale étant reliés entre eux par des axes radiaux qui maintiennent le centrage desdits tronçons tout en permettant des variations diamétrales relatives importantes de ces tronçons.

De préférence, l'enceinte métallique externe étanche qui enveloppe ladite structure principale en deux tronçons comprend au moins un soufflet de dilatation assemblé de façon démontable à une mince paroi métallique de ladite enceinte externe étanche, de sorte que chaque turbopompe associée à un tronçon correspondant de structure principale et à une partie d'enceinte externe étanche peut être montée ou démontée séparément de l'autre turbopompe.

Il faut noter qu'un alignement rigoureux des axes des deux turbopompes n'est pas indispensable avec la structure conforme à l'invention.

Selon un mode de réalisation spécifique facilitant les opérations de montage et démontage, le stator de la deuxième turbine est solidaire dudit deuxième tronçon de structure principale, et une bague fendue assure la retenue d'une cloison transversale de séparation entre les première et deuxième turbines, laquelle cloison transversale est rendue solidaire dudit premier tronçon de structure principale, de sorte qu'après séparation des deux tronçons de structure principale et dépose de ladite bague fendue, la cloison transversale et les autres cloisons définissant des chambres de cheminement des gaz peuvent être démontées par simple extraction, lesdites cloisons étant précomprimées pour être positionnées par rapport à la structure principale par simple élasticité.

D'autres caractéristiques et avantages de l'invention ressortiront de la description suivante de modes particuliers de réalisation, donnés à titre d'exemples, en référence aux dessins annexés, sur lesquels :

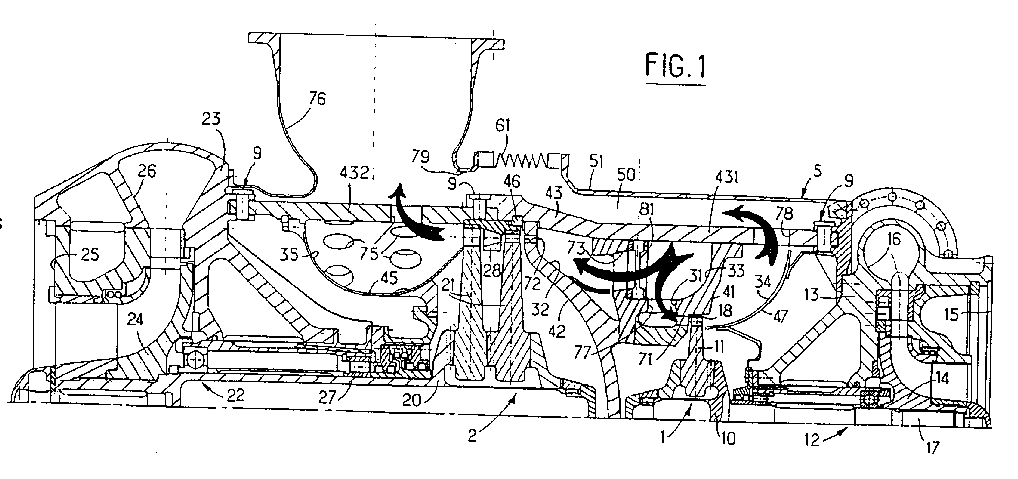

- la figure 1 est une vue en demi-coupe longitudinale d'un ensemble structural compact conforme à l'invention pour l'alimentation d'un moteur-fusée en ergols sous pression, dans lequel l'alimentation en gaz des turbines des deux turbopompes s'effectue en parallèle à partir des gaz de combustion produits par le générateur de gaz,

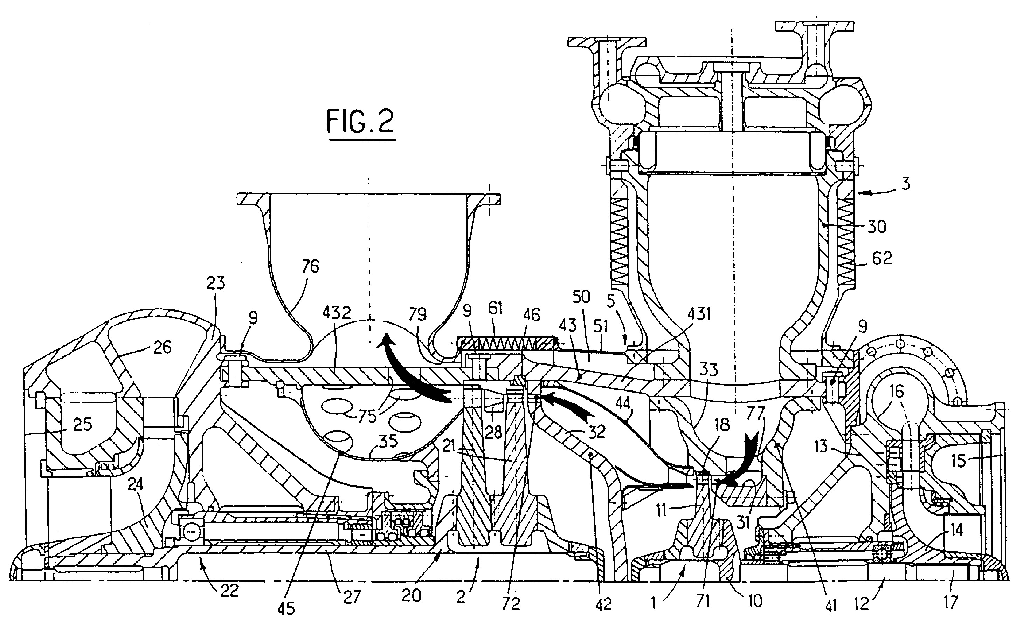

- la figure 2 est une vue en demi-coupe longitudinale d'un ensemble structural compact conforme à l'invention pour l'alimentation d'un moteur-fusée en ergols sous pression, dans lequel l'alimentation en gaz des turbines des deux turbopompes s'effectue selon un circuit série à partir des gaz de combustion produits par le générateur de gaz,

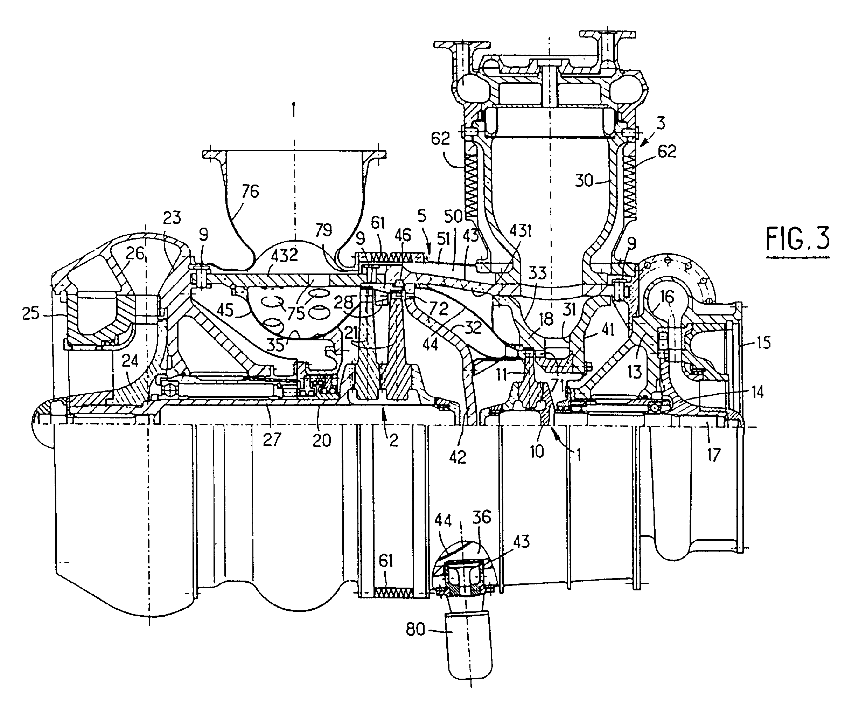

- la figure 3 est une vue d'un ensemble structural similaire à celui de la figure 2, en demi-coupe longitudinale et en élévation, avec arrachement partiel, montrant des moyens de régulation de la pression dans la chambre de communication entre la première turbine et la deuxième turbine des deux turbopompes,

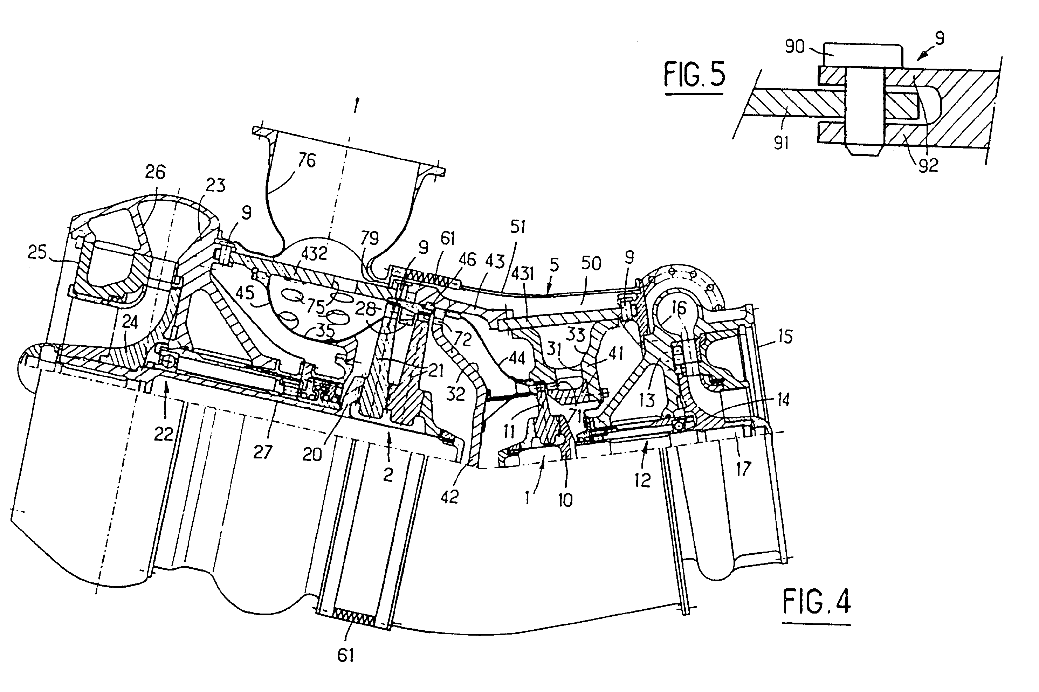

- la figure 4 est une vue d'un ensemble structural similaire à celui des figures 2 et 3, en demi-coupe longitudinale et en élévation, mais dans lequel les axes des arbres des deux turbopompes ne sont pas alignés mais formes un angle entre eux, et
- la figure 5 est une vue de détail montrant un exemple de moyen de liaison de la structure principale de l'ensemble structural selon l'invention.

La figure 1 montre, selon un premier mode de réalisation de l'invention, un ensemble structural regroupant des première et deuxième turbopompes 1, 2 pour la mise en pression d'un premier et d'un deuxième ergols destinés à alimenter la chambre de combustion d'un moteur-fusée. L'ensemble structural de la figure 1 est également prévu pour supporter le corps d'un générateur de gaz, non visible sur cette figure 1, qui produit des gaz chauds admis dans un collecteur annulaire 33 à partir duquel les turbines 10, 20 des turbopompes 1, 2 peuvent être alimentées.

Dans le mode de réalisation de la figure 1, comme dans les autres modes de réalisation des figures 2 à 4, la circulation des gaz de sortie du générateur de gaz portés à haute température et destinés à alimenter les turbines 10, 20 des turbopompes 1, 2 est réalisée par l'intermédiaire d'une structure fixe en matériaux composites thermostructuraux 41 à 47 qui définit un ensemble de chambres à cavités communicantes 31 à 35 pour assurer le cheminement et la distribution des gaz avec des séparations entre les zones soumises à des pressions différentes.

La structure fixe en matériaux composites comprend en premier lieu une structure principale 43 essentiellement de révolution autour des axes des arbres 17, 27 des turbopompes 1, 2, qui enveloppe les turbines 10, 20 et sert de liaison entre les corps de pompe métalliques 13, 23 des turbopompes 1, 2 et de support au corps 30 du générateur de gaz 3, qui n'est pas représenté sur la figure 1 mais est conforme à la représentation des figures 2 et 3.

La structure fixe en matériaux composites comprend en outre un ensemble d'éléments de cloisonnement interne 41, 42, 44, 45, 47 rapportés sur la structure principale de révolution 43 pour définir l'ensemble de cavités communicantes 31 à 35 assurant la circulation des gaz chauds en provenance du générateur de gaz vers les turbines 10, 20, ainsi que la collecte des gaz de sortie de ces turbines 10, 20 et l'évacuation de ces gaz vers un conduit d'évacuation unique 76.

La présente invention concerne essentiellement l'ensemble structural assurant la circulation et la distribution des gaz d'entraînement des turbines 10, 20 tout en assurant dans un ensemble compact et de façon démontable la solidarisation des corps de pompe 13, 23 des turbopompes 1, 2 et du corps de générateur de gaz. Le générateur de gaz 3 peut lui-même conserver une structure classique tout en présentant par exemple une chambre 30 en matériaux composites. La première turbopompe 1 présente une structure classique avec une pompe 12 comprenant un corps de pompe métallique 13, un orifice 15 d'arrivée d'ergol liquide, un canal annulaire 16 de refoulement d'ergol sous pression et une roue de pressurisation 14 montée à l'extrémité de l'arbre 17 de la turbopompe 1. La turbine 10 comprend elle-même une roue 11 qui peut être réalisée en matériaux composites, de façon connue en soi. La deuxième turbopompe 2 présente une structure semblable à celle de la première turbopompe 1 avec une pompe 22 comprenant un corps de pompe métallique 23, un orifice 25 d'arrivée d'ergol liquide, un canal annulaire 26 de refoulement d'ergol sous pression et une roue de pressurisation 24 montée à l'extrémité de l'arbre 27. Chaque trubopompe 1, 2 peut naturellement comprendre une pompe à simple ou double étage et une turbine à une ou plusieurs roues. Ainsi, sur la figure 1, la turbine 20 comprend deux roues 21.

On voit sur la figure 1 que la structure principale 43 en matériaux composites comprend un premier tronçon 431 relié au corps de pompe 13 qui est essentiellement de révolution autour de l'axe de l'arbre 17 de la turbopompe 1, et un second tronçon 432 relié au corps de pompe 23 qui est essentiellement de révolution autour de l'axe de l'arbre 27 de la turbopompe 2. Ces premier et second tronçons 431, 432 sont reliés entre eux par des liaisons 9 à axes radiaux en matériau composite. De même la liaison entre chacun des tronçons 431, 432 de structure principale 43 en matériau composite, et le corps de pompe 13, 23 est réalisée à l'aide de liaisons 9 à axes radiaux en matériau composite. Comme représenté sur la figure 5, une liaison 9 comprend un axe ou pion radial 90 traversant une extrémité 91 de l'une des pièces à assembler et une extrémité 92 en forme de fourche de l'autre pièce à assembler, la liaison 9 avec jeu assurant un centrage des pièces tout en permettant des variations diamétrales relatives importantes des pièces entre elles. Il est particulièrement intéressant d'utiliser des liaisons adéquates telles que les liaisons 9 entre la structure principale 43 et les corps de pompe 13, 23 car ces derniers constituent des pièces froides en contact avec les ergols tandis que la structure principale 43 constitue un ensemble de pièces chaudes en contact avec les gaz chauds.

Sur la figure 1, les éléments de cloisonnement 41 définissent avec le tronçon 431 de la structure principale 43 sur laquelle ils peuvent être fixés par des vis en composites, une chambre collectrice principale 33 alimentée par les gaz chauds du générateur de gaz. La chambre collectrice principale 33 débouche par des orifices 77 dans une chambre annulaire 31 alimentant une couronne d'injecteurs 71 disposée en regard de la roue de turbine 11 coopérant avec un stator 18. La chambre collectrice 33 communique par ailleurs avec une chambre 32 alimentant une couronne d'injecteurs 72 disposée en regard des roues de turbine 21 coopérant avec un stator 28 fixé sur le deuxième tronçon 432 de la structure de révolution 43. Un orifice 73 muni de moyens 81 d'ajustement de sa section, tels qu'une vanne papillon, commandés par un système de régulation, permet d'ajuster la pression des gaz dans la chambre 32 à une valeur différente de la pression régnant dans la chambre 31. Des cloisons minces 47, 45 en matériaux composites définissent avec la structure principale 43 de révolution des chambres 34, 35 de collecte des gaz de sortie respectivement des turbines 10 et 20. Les chambres annulaires 34, 35 de collecte des gaz de sortie des turbines 10, 20 débouchent par des orifices 78, 75 ménagés dans le carter principal 43 en matériaux composites dans un espace annulaire 50 de récupération de gaz délimité par une enceinte métallique externe étanche 5 qui enveloppe la structure principale 43 en forme de carter.

L'enceinte métallique externe étanche 5 joue plusieurs rôles importants. Cette enceinte 5 joue en premier lieu vis à vis de l'environnement extérieur le rôle d'écran protecteur contre le rayonnement thermique de la structure principale 43 en matériaux composites.

L'enceinte externe étanche 5 permet en second lieu de récupérer les fuites de gaz à travers les parois poreuses de la structure principale 43.

Enfin, l'enceinte externe étanche 5 facilite la récupération des gaz de sortie turbine collectés dans les chambres 34, 35 et évacués par les orifices 78, 75. L'ensemble des gaz présents dans l'espace annulaire 50 sont évacués naturellement, compte tenu des niveaux de pression, par un passage annulaire 79 vers un conduit d'évacuation unique 76. On notera que dans les modes de réalisation représentés sur les dessins, les gaz de sortie de la turbine 20 peuvent être évacués directement vers le conduit d'évacuation unique 76 par les orifices 75, tandis que, selon le mode de réalisation de la figure 1, les gaz de sortie de la turbine 10 sont d'abord introduits dans l'espace annulaire 50. Le conduit 76 permet l'acheminement des gaz concernés par exemple vers une réinjection au niveau du moteur.

Comme on peut le voir sur la figure 1, l'enceinte métallique externe 5 qui enveloppe la structure principale 43 en deux tronçons 431, 432 comprend un soufflet de dilatation 61 assemblé de façon démontable par des vis à une mince paroi métallique 51 de l'enceinte 5. Ceci, combiné à la réalisation de la structure principale 43 en deux tronçons 431, 432, permet de monter ou démonter séparément chaque turbopompe 1, 2 associée à un tronçon correspondant 431, 432 de structure principale 43 et à une partie 51 d'enceinte 5.

Une bague fendue 46 assure la retenue d'une cloison transversale 42 de séparation entre les première et deuxième turbines 10, 20. La cloison transversale 42 est rendue solidaire du premier tronçon 431 de structure principale 43 par exemple par élasticité. Dans ce cas, la cloison 42 est comprimée et la restitutoiion élastique assure l'effort de contact nécessaire au maintien du positionnement. Avec ce type de montage, après séparation des deux tronçons 431, 432 du carter 43, et dépose de la bague fendue 46, la cloison transversale 42 peut être démontée par simple extraction. Les autres cloisons telles que la cloison 41 du collecteur de gaz 33 et les cloisons de séparation des chambres 31, 32 peuvent également être retirées facilement après retrait de la cloison transversale 42, sans même qu'il soit nécessaire de procéder au retrait de la turbine 10.

Les diverses cloisons internes peuvent naturellement être fixées sur la structure principale 43 autrement que par élasticité, par exemple à l'aide de vis ou être réalisées à partir d'un ensemble de segments composites maintenus en place par un système mécanique.

Les figures 2 et 3 représentent un second mode de réalisation de l'invention qui met en oeuvre des turbopompes 1, 2 et un générateur de gaz 3 identiques aux éléments correspondants dont il a été question dans la description relative à la figure 1. Ces divers éléments représentés sur les figures 2 et 3 ne seront donc pas décrits à nouveau et leurs parties constituantes portent les mêmes numéros de référence que sur la figure 1.

L'ensemble structural en matériaux composites qui sur les figures 2 et 3 assure par la structure principale de révolution 43 la solidarisation entre les corps 13, 23 des turbopompes 1, 2 et le corps 30 du générateur de gaz 3, et qui comprend également un ensemble de cloisons en composite prenant appui sur la structure principale 43 pour délimiter des chambres communicantes de circulation des gaz, est assez semblable à l'ensemble structural de la figure 1. Toutefois, dans le cas des figures 2 et 3, les turbines 10, 20 sont alimentées en série, et non plus en parallèle, à partir de la chambre collectrice 33 recevant les gaz produits dans la chambre de combustion du générateur de gaz 3.

Ainsi, la chambre collectrice principale 33 débouche par de premiers orifices 77 exclusivement dans une première chambre annulaire 31 alimentant une couronne d'injecteurs, ou diffuseurs 71 disposée en regard de la roue 11 de la turbine 10. Les gaz de sortie de la turbine 10 sont collectés dans une chambre intermédiaire 32 qui permet l'alimentation d'une couronne d'injecteurs 72 disposée en regard de la roue 21 de la turbine 20. La chambre 35 de collecte des gaz de sortie de la turbine 20 est tout-à-fait identique à la chambre 35 de la figure 1.

Par rapport au mode de réalisation de la figure 1, la chambre de collecte 34 des gaz de sortie de la turbine 10 a été supprimée, et c'est la chambre intermédiaire 32, délimitée par une paroi mince extérieure 44 en matériau composite et la paroi transversale 42 qui joue le rôle de cette chambre de collecte 34.

Comme cela a été représenté sur la figure 3, dans le cas de turbines 10, 20 alimentées en série, un système de by-pass 80 permet de réduire, si cela s'avère utile, la pression dans la cavité intermédiaire 32 qui relie les deux turbines 10 et 20.

De façon plus particulière, la cloison mince 44, en matériau composite est percée d'un ensemble de petits trous qui mettent cette cavité en communication avec une autre cavité annulaire 36 qui est limitée par la structure principale de révolution 43. Le système de by-pass 80 est fixé sur cette structure et permet de faire communiquer la cavité 36 avec l'espace annulaire 50 de récupération des fuites défini par l'enceinte métallique extérieure 5 et la structure principale 43. Le système de by-pass 80 remplace ainsi le système 81 à vanne papillon permettant d'effectuer une régulation en jouant sur la section de l'orifice variable 73.

Sur les figures 2 et 3, la paroi métallique externe 5 de récupération des gaz enveloppe l'ensemble de la structure principale de révolution 43 en matériaux composites, comme dans le cas de la figure 1. Un soufflet de dilatation 61 assemblé par des vis est également placé au niveau de la séparation entre les deux ensembles turbopompe 1, 2. On note également que des soufflets métalliques 62 enveloppent la chambre de combustion 30 en matériaux composites du générateur de gaz 3 pour assurer également à la fois une protection contre les rayonnements thermiques et une récupération des fuites au niveau du générateur de gaz 3.

On notera que dans le cas du mode de réalisation des figures 2 et 3, les gaz de sortie de la turbine 20 collectés dans la chambre 35 sont renvoyés directement par les orifices 75 ménagés dans la structure principale 43 vers la tuyauterie unique 76 d'évacuation des gaz. De la sorte, l'espace annulaire 50 proprement dit ne sert qu'à récupérer les fuites et le débit dû à la régulation par le système à by-pass 80, et peut être de dimensions plus faibles que dans le cas du mode de réalisation de la figure 1 où les gaz de sortie de la turbine 10 étaient également évacués vers cet espace annulaire 50.

Par ailleurs, dans certains cas, l'étanchéité de la structure principale 43 de révolution peut être améliorée par imprégnation ou par revêtement. Il est alors possible de prévoir une enceinte externe métallique 5 simplifiée, notamment par réduction de son épaisseur et utilisation d'un matériau peu noble. Ceci contribue à diminuer la masse de l'enceinte externe et les coûts de fabrication.

On voit sur les figures 2 et 3, comme dans le cas du mode de réalisation de la figure 1, que la structure principale 43 de révolution reliant les deux turbopompes 1, 2 est composée de deux éléments de révolution 431, 432 permettant un montage séparé et une interchangeabilité des deux ensembles turbopompes composés d'une turbopompe proprement dite 1 ou 2 et d'un élément de révolution 431 ou 432. Comme cela a déjà été indiqué, chaque élément de révolution 431, 432 est fixé sur le corps de pompe correspondant 13, 23 à l'aide de pions radiaux 90 montés dans des chapes 92 solidaires du corps de pompe 13, 23, afin de permettre des variations diamétrales dues aux écarts de températures entre les composants, tout en maintenant le centrage. La liaison entre les deux éléments de révolution 431, 432 est réalisée de la même façon avec des pions radiaux 90.

On notera que l'ensemble structural selon la présente invention s'applique aussi, comme représenté sur la figure 4, à un ensemble de deux turbopompes 1, 2 dont les axes des arbres de rotation ne sont pas alignés mais forment un certain angle entre eux. Les tronçons 431, 432 de la structure principale 43 sont alors de révolution autour de chacun des axes des turbopompes 1, 2 et l'enceinte extérieure 5 présente elle-même la forme d'un secteur de génération torique.

Le fait de ne pas devoir impérativement aligner les arbres des deux turbopompes 1, 2 associées au sein d'un même ensemble structural permet de mieux positionner les entrées 15, 25 des ergols dans les pompes 12, 22 par rapport aux lignes d'alimentation ou de répondre à certains impératifs d'aménagement.

On notera également que l'ensemble structural selon l'invention permet d'utiliser des turbines de diamètres très différents.

## Revendications

1. Ensemble structural compact d'alimentation d'un moteur-fusée en ergols à haute pression, comprenant un générateur de gaz (3), une première turbopompe (1) composée d'une première turbine (10) et d'une première pompe (12) pour l'alimentation de la chambre de combustion du moteur-fusée en un premier ergol, une deuxième turbopompe (2) composée d'une deuxième turbine (20) et d'une deuxième pompe (22) pour l'alimentation de la chambre de combustion du moteur-fusée en un deuxième ergol, des moyens de distribution des gaz chauds issus du générateur de gaz (3) vers lesdites première et deuxième turbines (10, 20), et des moyens de collecte et d'évacuation des gaz chauds de sortie desdites turbines (10, 20),
**caractérisé** en ce qu'il comprend une structure principale (43) essentiellement de révolution autour des axes de rotation des première et deuxième turbopompes (1,2), qui est réalisée en matériaux composites thermostructuraux, enveloppe lesdites première et deuxième turbines (10, 20), et solidarise l'ensemble des corps (13, 23) de pompe des première et deuxième turbopompes (1, 2) et du corps (30) du générateur de gaz (3); des éléments de cloisonnement (41, 42, 44, 45, 47) interne rapportés sur ladite structure principale (43), qui sont également réalisés en matériaux composites thermostructuraux et délimitent l'espace interne à ladite structure principale (43) en une pluralité de cavités communicantes (31 à 35) assurant la circulation de gaz chauds en provenance du générateur de gaz (3) vers lesdites première et deuxième turbines (10, 20) ainsi que la collecte des gaz de sortie desdites turbines (10, 20) et l'évacuation de ces gaz vers un même conduit d'évacuation (76), et une enceinte métallique externe étanche (5) qui enveloppe ladite structure principale (43) en constituant un écran contre le rayonnement thermique de ladite structure principale (43) en matériaux composites et en délimitant un espace annulaire (50) qui débouche dans ledit conduit d'évacuation (76), et sert à la récupération des gaz de sorties des turbines ainsi que des gaz résultant des fuites à travers les parois composites poreuses.

2. Ensemble structural selon la revendication 1, caractérisé en ce que les liaisons entre les corps de pompe (13, 23) constituant des pièces froides et ladite structure principale (43) constituée de pièces chaudes sont assurées par des axes radiaux (90) qui maintiennent le centrage de ladite structure principale (43) tout en permettant des variations diamétrales relatives importantes de celle-ci par rapport aux corps de pompe (13, 23).

3. Ensemble structural selon l'une quelconque des revendications 1 et 2, caractérisé en ce que les arbres (17, 27) des première et deuxième turbopompes (1, 2) sont alignés axialement.

4. Ensemble structural selon l'une quelconque des revendications 1 et 2, caractérisé en ce que les axes des arbres (17, 27) des première et deuxième turbopompes (1, 2) forment un angle entre eux.

5. Ensemble structural selon l'une quelconque des revendications 1 à 4, dans lequel les turbines (10, 20) des première et deuxième turbopompes (1, 2) sont alimentées en parallèle à partir du générateur de gaz (3), caractérisé en ce que les éléments de cloisonnement (41, 42, 45, 47) définissent une chambre collectrice principale (33) alimentée par les gaz chauds du générateur de gaz (3) qui débouche directement d'une part par de premiers orifices (77) dans une chambre annulaire (31) alimentant une couronne d'injecteurs (71) disposée en regard de la première turbine (10) et d'autre part, par un orifice variable (73) muni de moyens (81) d'ajustement de section commandés par un système de régulation, dans une seconde chambre (32) alimentant une couronne d'injecteurs (72) disposée en regard de la deuxième turbine (20), une première chambre (34) de collecte des gaz de sortie de la première turbine (10) et une deuxième chambre (35) de collecte des gaz de sortie de la deuxième turbine (20), et en ce que des orifices (75, 78) sont ménagés dans la structure principale (43) pour permettre l'évacuation des gaz contenus dans les première et deuxième chambres de collecte (34, 35) vers ledit espace annulaire de récupération de gaz débouchant dans ledit conduit d'évacuation (76).

6. Ensemble structural selon l'une quelconque des revendications 1 à 4, dans lequel les turbines (10, 20) des première et deuxième turbopompes (1, 2) sont alimentées en série à partir du générateur de gaz (3), caractérisé en ce que les éléments de cloisonnement (41, 42, 44, 45) définissent une chambre collectrice principale (33) alimentée par les gaz chauds du générateur de gaz (3) qui débouche par de premiers orifices (77) dans une première chambre annulaire (31) alimentant une couronne d'injecteurs (71) disposée en regard de la première turbine (10), une chambre intermédiaire (32) pour collecter les gaz de sortie de la première turbine (10) et alimenter une couronne d'injecteurs (72) disposée en regard de la deuxième turbine (20), et une chambre (35) de collecte des gaz de sortie de la deuxième turbine (20), et en ce que des orifices (75) sont ménagés dans la structure principale (43) pour permettre l'évacuation des gaz contenus dans la chambre (35) de collecte des gaz de sortie de la deuxième turbine (20) vers ledit espace annulaire de récupération de gaz débouchant dans ledit conduit d'évacuation (76).

7. Ensemble structural selon la revendication 6, caractérisé en ce que la chambre intermédiaire (32) est limitée extérieurement par une cloison mince (44) en matériaux composites percée d'une pluralité de petits trous qui mettent la chambre intermédiaire (32) en communication avec une cavité annulaire (36) limitée extérieurement par la structure principale (43) de révolution, et en ce qu'un système (80) de régulation par by-pass est monté sur ladite structure principale (43) pour faire communiquer sélectivement ladite cavité annulaire (36) avec ledit espace annulaire (50) de récupération de gaz et réduire sélectivement la pression dans ladite chambre intermédiaire (32).

8. Ensemble structural selon l'une quelconque des revendications 1 à 7, caractérisé en ce que la structure principale (43) de révolution en matériaux composites reliant les première et deuxième turbopompes (1, 2) comprend un premier tronçon de structure principale (431) relié au corps de pompe (13) de la première turbopompe (1) et essentiellement de révolution autour de l'axe de rotation de ladite première turbopompe (1) et un second tronçon de structure principale (432) relié au corps de pompe (23) de la deuxième turbopompe (2) et essentiellement de révolution autour de l'axe de rotation de ladite deuxième turbopompe (2), les premier et second tronçons de structure principale (431, 432) étant reliés entre eux par des axes radiaux (90) qui maintiennent le centrage desdits tronçons tout en permettant des variations diamétrales relatives importantes de ces tronçons (431, 432).

9. Ensemble structural selon la revendication 8, caractérisé en ce que l'enceinte métallique externe étanche (5) qui enveloppe ladite structure principale (43) en deux tronçons (431, 432) comprend au moins un soufflet de dilatation (61) assemblé de façon démontable à une mince paroi métallique (51) de ladite enceinte externe étanche (5), de sorte que chaque turbopompe (1,2) associée à un tronçon correspondant (431, 432) de structure principale (43) et à une partie (51) d'enceinte externe étanche (5) peut être montée ou démontée séparément de l'autre turbopompe (2,1).

10. Ensemble structural selon la revendication 9, caractérisé en ce que le stator (28) de la deuxième turbine (20) est solidaire dudit deuxième tronçon (432) de structure principale (43), et en ce qu'une bague fendue (46) assure la retenue d'une cloison transversale (42) de séparation entre les première et deuxième turbines (1, 2), laquelle cloison transversale (42) est rendue solidaire dudit premier tronçon (431) de structure principale (43), de sorte qu'après séparation des deux tronçons (431, 432) de structure principale (43) et dépose de ladite bague fendue (46), la cloison transversale (42) et les autres cloisons (44) définissant des chambres (32) de cheminement des gaz peuvent être démontées par simple extraction, lesdites cloisons étant précomprimées pour être positionnées par rapport à la structure principale (43) par simple élasticité.

11. Ensemble structural selon l'une quelconque des revendications 1 à 10, caractérisé en ce que les éléments de cloisonnement (41) délimitant la chambre collectrice principale annulaire (33) sont fixés par des vis en composite sur la structure principale (43) de révolution.

12. Ensemble structural selon l'une quelconque des revendications 1 à 11, caractérisé en ce que la structure principale (43) de révolution en matériaux composites présente une étanchéité améliorée par imprégnation ou par revêtement et en ce que l'enceinte métallique externe étanche (5) est réalisée en un matériau peu noble et présente une épaisseur réduite.

## Patentansprüche

1. Kompakte Strukturanordnung zum Speisen eines Raketenmotors mit Treibstoff unter hohem Druck, mit einem Gasgenerator (3), einer ersten Turbopumpe (1), die aus einer ersten Turbine (10) und einer ersten Pumpe (12) gebildet ist, zum Versorgen der Brennkammer des Raketenmotors mit einem ersten Treibstoff, einer zweiten Turbopumpe (2), gebildet aus einer zweiten Turbine (20) und einer zweiten Pumpe (22) zum Versorgen der Brennkammer des Raketenmotors mit einem zweiten Treibstoff, Einrichtungen zum Verteilen der heißen Gase, die von dem Gasgenerator (3) ausgehen zu der ersten und zweiten Turbine (10, 20) und mit Einrichtungen zum Sammeln und Ausbringen der heißen Austrittsgase der Turbinen (10, 20),
**dadurch gekennzeichnet**, daß sie eine Hauptstruktur (43) im wesentlichen in Form eines Drehkörpers um die Drehachsen der ersten und zweiten Turbopumpe (1, 2) aufweist, die aus einem thermostrukturellen Verbundmaterial gebildet wird, das die erste und zweite Turbine (10, 20) umgibt, und die Anordnung der Pumpenkörper (13, 23) der ersten und zweiten Turbopumpe (1, 2) und des Körpers (30) des Gasgenerators (3) miteinander verbindet; innere
Trennelemente (41, 42, 44, 45, 47) aufweist, die an der Hauptstruktur (43) angebracht sind, die ebenfalls aus thermostrukturellen Verbundmaterialien gebildet sind, und den Innenraum zu der Hauptstruktur (43) in einer Mehrzahl von miteinander verbundenen Hohlräumen (31 bis 35) begrenzen, die die Zirkulation der heißen Gase ausgehend von dem Gasgenerator (3) zu der ersten und zweiten Turbine (10, 20) sowie die Sammlung der Austrittsgase aus den Turbinen (10, 20) und die Evakuierung dieser Gase zu einer selben Ausbringleitung (26) sicherstellen, und einen metallischen äußeren dichten Mantel (5) aufweist, der die Hauptstruktur (43) einhüllt unter Bildung eines Schirmes gegen die Wärmestrahlung der Hauptstruktur (43) aus Verbundmaterialien und unter Begrenzung eines ringförmigen Raumes (50), der in der Ausbringleitung (76) mündet, und dem Sammeln bzw. Wiedergewinn der Austrittsgase aus den Turbinen sowie der Gase, die von Undichtigkeiten durch die porösen Verbundstoff-Seitenwände herrühren, dient.

2. Strukturanordnung nach Anspruch 1, dadurch gekennzeichnet, daß die Verbindungen zwischen den Pumpenkörpern (13, 23), die Kühlteile und die Hauptstruktur (43) bilden, die aus heißen Teilen gebildet wird, sichergestellt werden durch radiale Achsen (90), die die Zentrierung der Hauptstruktur (43) beibehalten unter Erlauben von relativ großen Durchmesser-Änderungen dieser bezüglich der Pumpenkörper (13, 23).

3. Strukturanordnung nach einem der Ansprüche 1 oder 2, dadurch gekennzeichnet, daß die Wellen (17, 27) der ersten und zweiten Turbopumpe (1, 2) axial fluchten.

4. Strukturanordnung nach einem der Ansprüche 1 oder 2, dadurch gekennzeichnet, daß die Achsen der Wellen (17, 27) der ersten und zweiten Turbopumpe (1, 2) einen Winkel miteinander bilden.

5. Strukturanordnung nach einem der Ansprüche 1 bis 4, bei der die Turbinen (10, 20) der ersten und zweiten Turbopumpe (1, 2) parallel ausgehend von dem Gasgenerator (3) versorgt werden, dadurch gekennzeichnet, daß die Trennelemente (41, 42, 45, 47) eine Hauptsammelkammer (33) definieren, die mit den heißen Gasen des Gasgenerators (3) gespeist wird, die direkt einerseits durch erste Öffnungungen (77) in eine ringförmige Kammer (31) mündet, die einen Injektorenkranz (71) speist, der gegenüber der ersten Turbine (10) angeordnet ist, und andererseits durch eine veränderbare Öffnung (73) mündet, die mit Einstelleinrichtungen (81) des Querschnitts versehen sind, die durch ein Regelsystem betätigt wird, in eine zweite Kammer (32), die einen Injektorenkranz (72) versorgt, der gegenüber der zweiten Turbine (20), einer ersten Sammelkammer (34) der Austrittsgase der ersten Turbine (10) und einer zweiten Sammelkammer (35) der Austrittsgase der zweiten Turbine (20) angeordnet ist, und daß die Öffnungen (75, 78) in der Hauptstruktur (43) ausgebildet sind, um das Ausbringen der Gase, die in der ersten und zweiten Sammelkammer (34, 35) enthalten sind, zu dem ringförmigen Gaswiedergewinnungsraum zu erlauben, der in die Ausbringleitung (76) mündet.

6. Strukturanordnung nach einem der Ansprüche 1 bis 4, bei der die Turbinen (10, 20) der ersten und zweiten Turbopumpe (1, 2) in Reihe ausgehend von einem Gasgenerator (3) versorgt werden, dadurch gekennzeichnet, daß die Trennelemente (41, 42, 44, 45) eine Hauptsammelkammer (33) definieren, die mit den heißen Gasen des Gasgenerators (3) versorgt wird, die durch erste Öffnungen (77) in eine erste ringförmige Kammer (31) mündet, die einen Injektorenkranz (71) speist, der gegenüber der ersten Turbine (10) angeordnet ist, eine Zwischenkammer (32) definieren, um die Austrittsgase aus der ersten Turbine (10) zu sammeln und einen Injektorenkranz (72) zu speisen, der gegenüber der zweiten Turbine (20) angeordnet ist, und eine Sammelkammer (35) von Austrittsgas aus der zweiten Turbine (20) aufweist, und daß Öffnungen (75) in der Hauptstruktur (43) ausgebildet sind, um das Ausbringen der in der Sammelkammer von Austrittsgas (35) der zweiten Turbine (20) enthaltenen Gase zu dem ringförmigen Wiedergewinnungsraum von Gasen zu erlauben, der in die Ausbringleitung (76) mündet.

7. Strukturanordnung nach Anspruch 6, dadurch gekennzeichnet, daß die Zwischenkammer (32) außen durch eine dünne Trennwand (44) aus Verbundmaterial begrenzt wird, durchsetzt mit einer Mehrzahl von kleinen Löchern, die die Zwischenkammer (32) in Verbindung mit einem ringförmigen Hohlraum (36) setzen, der außen durch die Hauptdrehstruktur (43) begrenzt ist, und daß ein Regulationssystem (80) durch Bypass auf der Hauptstruktur (43) angebracht ist, um wahlweise den ringförmigen Hohlraum (36) mit dem ringförmigen Raum (50) der Wiedergewinnung von Gas zu verbinden und wahlweise den Druck in der Zwischenkammer (32) zu reduzieren.

8. Strukturanordnung nach einem der Ansprüche 1 bis 7, dadurch gekennzeichnet, daß die Hauptdrehstruktur (43) aus Verbundmaterial, die die erste und zweite Turbopumpe (1, 2) miteinander verbindet, ein erstes Stück (431) der Hauptstruktur aufweist, das mit dem Pumpenkörper der ersten Turbopumpe (1) verbunden ist und im wesentlichen drehend um die Drehachse der ersten Turbopumpe (1) ist, und ein zweites Stück (432) der Hauptstruktur aufweist, das mit dem Pumpenkörper (23) der zweiten Turbopumpe (2) verbunden ist, und im wesentlichen drehend ist um die Drehachse der zweiten Turbopumpe (2), wobei das erste und zweite Stück (431, 432) der Hauptstruktur untereinander durch radiale Achsen (90) verbunden sind, die die Zentrierung der Stückebeibehalten und dabei relativ große Durchmesserunterschiede bzw. -veränderungen dieser Stücke (431, 432) erlauben.

9. Strukturanordnung nach Anspruch 8, dadurch gekennzeichnet, daß der dichte äußere metallische Mantel (5), der die Hauptstruktur (43) in zwei Stücken (431, 432) umgibt, wenigstens einen Dehnungsausgleich (61) aufweist, der derart demontierbar von einer dünnen metallischen Seitenwand (51) des dichten äußeren Mantels (5) zusammengesetzt ist, derart, daß jede Turbopumpe (1, 2), die mit einem entsprechenden Stück (431, 432) der Hauptstruktur (43) und mit einem Bereich (51) des dichten äußeren Mantels (5) verbunden ist, getrennt von der anderen Turbopumpe (2, 1) angebracht oder demontiert werden kann.

10. Strukturanordnung nach Anspruch 9, dadurch gekennzeichnet, daß der Stator (28) der zweiten Turbine (20) mit dem zweiten Stück (432) der Hauptstruktur (43) verbunden ist, und daß ein geschlitzter Ring (46) den Rückhalt einer quer verlaufenden Trennwand (42) zwischen der ersten und der zweiten Turbine (1, 2) sicherstellt, wobei die quer verlaufende Trennwand (42) verbunden wird mit dem ersten Stück (431) der Hauptstruktur (43), derart, daß nach Trennen der beiden Stücke (431, 432) der Hauptstruktur (43) und Absetzen des geschlitzten Ringes (46), die quer verlaufende Trennwand (42) und die anderen Trennwände (44), die die Führungskammern (32) der Gase definieren, durch einfaches Herausziehen entfernt werden können, wobei die Trennwände vorkomprimiert sind, um bezüglich der Hauptstruktur (43) durch einfache Elastizität positioniert zu werden.

11. Strukturanordnung nach einem der Ansprüche 1 bis 10, dadurch gekennzeichnet, daß die Trennwandelemente (41), die die ringförmige Hauptsammelkammer (33) begrenzen, durch Schrauben aus Verbundmaterial auf der Hauptdrehstruktur (43) befestigt sind.

12. Strukturanordnung nach einem der Ansprüche 1 bis 11, dadurch gekennzeichnet, daß die Hauptdrehstruktur (43) aus Verbundmaterial eine verbesserte Dichtheit durch Imprägnierung oder durch Überzug aufweist, und daß der dichte äußere metallische Mantel (5) aus einem wenig edlen Material gebildet ist und eine verringerte Dicke aufweist.

## Claims

1. Compact structural assembly for feeding propellants at high pressure to a rocket engine, comprising a gas generator (3), a first turbopump (1) constituted by a first turbine (10) and a first pump (12) for feeding the combustion chamber of the rocket engine with a first propellant, a second turbopump (2) constituted by a second turbine (20) and a second pump (22) for feeding the combustion chamber of the rocket engine with a second propellant, means for delivering the hot gases from the gas generator (3) to said first and second turbines (10, 20), and means for collecting and exhausting the hot outlet gases from said turbines (10, 20),
characterized in that the assembly comprises a main structure (43) which is essentially circularly symmetrical about the axes of rotation of the first and second turbopumps (1, 2), the main structure being made of thermo-structural composite materials, surrounding said first and second turbines (10, 20), and interconnecting the body (30) of the gas generator (3) with the pump bodies (13, 23) of the first and second turbopumps (1, 2); internal partition elements (41, 42, 44, 45, 47) applied to said main structure (43) and likewise made of thermo-structural composite materials, the partition elements dividing the space inside the said main structure (43) into a plurality of intercommunicating cavities (31 to 35) enabling the hot gases from the gas generator (3) to flow to said first and second turbines (10, 20), and also serving to collect the outlet gases from said turbines (10, 20) and to exhaust said gases towards a common exhaust duct (76); and a leakproof outer metal enclosure (5) which surrounds said main structure (43), which constitutes a screen against thermal radiation from said main structure (43) of composite materials, and which delimits an annular space (50) opening out into said exhaust duct (76) and serving to recover the outlet gases from the turbines and also the gases due to leaks through the porous composite walls.

2. Structural assembly according to claim 1, characterized in that the connections between the pump bodies (13, 23) constituting cold parts, and the said main structure (43) constituting hot parts, and the said main structure (43) constituted by hot parts, are provided by radial pins (90) which keep said main structure (43) centered while allowing for major relative changes in diameter between the main structure and the pump bodies (13, 23).

3. Structural assembly according to any one of claims 1 and 2, characterized in that the shafts (17, 27) of the first and second turbopumps (1, 2) are in axial alignment.

4. Structural assembly according to any one of claims 1 and 2, characterized in that the pins of the shafts (17, 27) of the first and second turbopumps (1, 2) are at an angle.

5. Structural assembly according to any one of claims 1 to 4, in which the turbines (10, 20) of the first and second turbopumps (1, 2) are fed in parallel from the gas generator (3), characterized in that the partitioning elements (41, 42, 45, 47) define a main collecting chamber (33) fed with the hot gases from the gas generator (3) and which opens out directly, on the one hand, via first orifices (77) into an annular chamber (31) feeding a ring of injectors (71) disposed facing the first turbine (10) and, on the other hand, via a variable orifice (73) provided with section-adjusting means (81) controlled by a regulation system into a second chamber (32) feeding a ring of injectors (72) facing the second turbine (20), a first chamber (34) for collecting the outlet gases from the first turbine (10) and a second chamber (35) for collecting the outlet gases from the second turbine (20), and in that orifices (75, 78) are provided through the main structure (43) for exhausting the gases contained in the first and second collecting chambers (34, 35) into said annular space for recovering gases which opens out into said exhaust duct (76).

6. Structural assembly according to any one of claims 1 to 4, in which the turbines (10, 20) of the first and second turbopumps (1, 2) are fed in series from the gas generator (3), characterized in that the partitioning elements (41, 42, 44, 45) define a main collecting chamber (33) fed with the hot gases from the gas generator (3) which opens out via first orifices (77) into a first annular chamber (31) feeding a ring of injectors (71) facing the first turbine (10), an intermediate chamber (32) for collecting the outlet gases from the first turbine (10) and for feeding a ring of injectors (72) disposed facing the second turbine (20), and a chamber (35) for collecting the outlet gases from the second turbine (20), and in that orifices (75) are provided through the main structure (43) for exhausting the gases contained in the, chamber (35) for collecting the outlet gases from the second turbine (20) into said annular space for recovering gases which opens out into said exhaust duct (76).

7. Structural assembly according to claim 6, characterized in that the intermediate chamber (32) is outwardly delimited by a thin partition (44) made of composite materials and pierced by a plurality of small holes putting the intermediate chamber (32) into communication with an annular cavity (36) which is outwardly delimited by the main circularly symmetrical structure (43), and in that a by-pass regulation system (80) is mounted on said main structure (43) in order to cause said annular cavity (36) to communicate selectively with said annular space (50) for recovering gases, thereby selectively reducing the pressure in said intermediate chamber (32).

8. Structural assembly according to any one of claims 1 to 7, characterized in that the main circularly symmetrical structure (43) made of composite materials and interconnecting the first and second turbopumps (1, 2) comprises a first length of main structure (431) connected to the pump body (13) of the first turbopump (1) and essentially circularly symmetrical about the axis of rotation of said first turbopump (1) and a second length of main structure (432) connected to the pump body (23) of the second turbopump (2) and essentially circularly symmetrical about the axis of rotation of said second turbopump (2), the first and second lengths of the main structure (431, 432) being interconnected by radial pins (90) which keep said lengths centered while allowing for major relative changes in diameter between said lengths (431, 432).

9. Structural assembly according to claim 8, characterized in that the leakproof outer metal enclosure (5) which surrounds said two-lengths (431, 432) main structure (43) includes at least one expansion bellows (61) assembled in dismountable manner to a thin metal wall (51) of said leakproof outer enclosure (5) such that each turbopump (1, 2) associated with a corresponding length (431, 432) of the main structure (43) and with a portion (51) of the leakproof outer enclosure (5) is capable of being mounted and dismounted separately from the other turbopump (2, 1).

10. Structural assembly according to claim 9, characterized in that the stator (28) of the second turbine (20) is fixed to said second length (432) of the main structure (43) and, in that a split ring (46) retains a transverse separating partition (42) between the first and second turbines (1, 2), which transverse partition (42) is fixed to said first length (431) of the main structure (43) in such a manner that after the two lengths (431, 432) of the main structure (43) have been separated and said split ring (46) has been removed, the transverse partition (42) and the other partitions (44) defining the gas flow chambers (32) can be dismounted merely by being extracted, said partitions being precompressed so as to be positioned relative to the main structure (43) solely by elasticity.

11. Structural assembly according to any one of claims 1 to 10, characterized in that the partitioning elements (41) defining the main annular collecting chamber (33) are fixed by composite screws to the main circularly symmetrical structure (43).

12. Structural assembly according to any one of claims 1 to 11, characterized in that the main circularly symmetrical structure (43) made of composite materials has its gas-tightness improved by being impregnated or by being coated, and in that the leakproof outer metal enclosure (5) is made of a relatively cheap material having relatively small thickness.
